# EUROPEAN PATENT APPLICATION

(11) **EP 2 738 709 A1**
(43) Date of publication of application: **04.06.2014**
(21) Application number: 12306476.8
(22) Date of filing: 28.11.2012
(51) Int. Cl.: G06F 21/60

(54) **An improved method and device for enforcing privacy policies**

(71) Applicant: Alcatel Lucent, 75007 Paris (FR)
(72) Inventor: Betge-Brezetz, Stéphane, 91620 Nozay (FR); Kamga, Guy-Bertrand, 91620 Nozay (FR)
(74) Representative: Loyer & Abello

(57) **Abstract**

A method for processing sensitive data (6) associated with a privacy policy in a file system (32) adapted to execute file management functions in response to system calls (100), the method comprising:
- intercepting, by a data processing device (1), a system call (100) for performing an action on sensitive data (6);
- determining that the system call (100) relates to sensitive data (6) associated with a privacy policy;
- retrieving the privacy policy associated with the sensitive data (6) for which an action is requested;
- determining whether the system call (100) complies with the privacy policy associated with the sensitive data (6) for which an action is requested; and
- initiating execution of the file management function corresponding to the system call (100) based on the determination that the system call (100) complies with the privacy policy.

## Description

### Field of the present invention

The present invention relates to the control of action on digital data in computer systems by means of privacy policies enforcement. More particularly, the invention relates to methods and devices for processing sensitive data associated with privacy policies.

### Background

Due to new information technology trends, such as cloud computing or "Bring Your Own Device" usages, there is a need to improve privacy policies enforcement. Cloud computing technology offers strong advantages for enterprises such as cost reduction or flexibility but it also raises new risks since sensitive data is stored and moved in servers located outside the enterprise premise. BYOD usages relate to employees using their own device to access privileged company resources as well as their personal application and data. Therefore, there is a need to continuously keep sensitive data privacy and confidentiality upon manipulating sensitive data (e.g. by read/write, copy, move and/or delete actions on data).

Moreover, a large variety of privacy policies must be defined. For example, some sensitive data could be associated with a large variety of privacy policies comprising some regulatory policies depending on the country where data is located, some enterprise policies defined by the enterprise and which may also vary depending on the localization of the user site and even some individual policies defined by an employee or a customer regarding his personal data stored in the enterprise information system. Thus, there is a need to develop tools allowing a large variety of privacy policies to be enforced.

Known access control technologies such as Digital Right Management technology (DRM), cluster file systems and security enhanced Linux allow associating some rights and restrictions to contents. Other known systems encapsulate encrypted data and associated privacy policies into an encrypted file called a Privacy Data Envelope (PDS).

### Summary

Various embodiments provide a method and apparatus providing secure access and processing of sensitive data. In particular, the secure access and processing allows enforcing multiple privacy policies.

In a first embodiment, a method for processing sensitive data associated with a privacy policy in a file system adapted to execute file management functions in response to system calls is provided. The method includes:
- intercepting, by a data processing device, a system call for performing an action on sensitive data;
- determining that the system call relates to sensitive data associated with a privacy policy;
- retrieving the privacy policy associated with the sensitive data for which an action is requested;
- determining whether the system call complies with the privacy policy associated with the sensitive data for which an action is requested; and
- initiating execution of the file management function corresponding to the system call (100) based on the determination that the system call (100) complies with the privacy policy.

Advantageously, sensitive data in data access requests may be protected.

The term "system call" as defined herein refers to a file system Input/Output request.

In some embodiments, the system call may be intercepted in an operating system (OS) space and forwarded to a user space and the step of determining whether the system call complies with the privacy policy associated with the sensitive data for which an action is requested may be executed in the user space. Advantageously, these embodiments may be performed without modifying the core of the operating system.

In some embodiments:
- the method comprises generating an error message if the system call does not comply with the said privacy policy;
- sensitive data is encrypted, the method comprising decrypting the sensitive data if the system call complies with the privacy policy;
- the sensitive data and the associated privacy policy are encapsulated into an encrypted file, the method further comprising decrypting the encrypted file in order to retrieve the privacy policy;
- the method comprises a preliminary step of generating a link associating the sensitive date and the associated privacy policy;
- the link between the sensitive data and the associated privacy policy is generated by:
   - encapsulating the sensitive data and the associated privacy policy in a file,
   - putting the privacy policy as extended attribute in a file containing the sensitive data, or
   - generating and storing a link in a dedicated file Directory.
- the system call corresponds to a file management function which is selected in the group consisting of copy, delete, rename, read, write and move functions;
- the method comprises a step of creating or getting the encrypted data wherein a link between the said encrypted data and the associated privacy policy is stored; and/or
- during the step of creating or getting the encrypted data, the encrypted data and the associated privacy policy are stored.

In a second embodiment, a data processing device is provided for processing sensitive data associated with a privacy policy, the data processing device comprising:
- a data storage; and
- a processor communicatively connected to the data storage, the processor being configured to:
   - intercept a system call data originating from an operating system interface for performing an action on sensitive data;
   - determine that an intercepted system call relates to sensitive data associated with a privacy policy;
   - retrieve the privacy policy associated with sensitive data;
   - determine whether the intercepted system call complies with a privacy policy associated with the sensitive data for which an action is requested; and
   - send an instruction to the file system for executing the file management function corresponding to the system call in response to determining that the system call complies with the said privacy policy.

In some embodiments, such a data processing device may comprise one or more of the features below:
- the data processing device comprises a file system adapted to execute file management function in response to system calls;
- the data processing device comprises an operating system interface for receiving the system call;
- the processor is configured to intercept the system call in a system space and forward the intercepted system call in a user space, the determining whether the intercepted system call complies with a privacy policy associated with the sensitive data for which an action is requested being executed in the user space;

- the data processing device comprises a FUSE kernel module for intercepting the system call originating from the operating system interface;
- the processor is configured to generate an error message if the system call does not comply with the privacy policy;
- the processor is configured to decrypt the sensitive data in response to determining that the system call complies with the said privacy policy;
- the processor is configured to decrypt an encrypted file in order to retrieve the privacy policy wherein the encrypted file encapsulates both the sensitive data and the associated privacy policy;
- the data processing device comprises a file and policy manager sub-module capable of generating and storing a link between the sensitive data and the associated privacy policy;
- the data processing device comprises a data storage for storing the sensitive data and the associated privacy policy;
- the processor configured to determine whether the system call complies with a privacy policy is further configured to support XACML privacy policies;
- the processing device is a physical computing device (e.g., server or client device); or
- the processing device is a virtual machine running in a physical computing device.

### Brief description of the drawings

These and other aspects of the present invention will be apparent from and elucidated with reference to the embodiments described hereinafter, by way of example, with reference to the drawings.
- **Figure 1** is an overall view of a data processing device according to an embodiment.
- **Figure 2** is a functional diagram of the data processing device that emphasizes steps taking place when a sensitive data is created or uploaded in a Privacy-Aware File System.
- **Figure 3** is a functional diagram of the data processing device that emphasizes steps taking place whenever an action on sensitive data is requested.
- **Figure 4** is a functional diagram of a programmed computer in which embodiments of the processing device can be implemented.

### Detailed description of the embodiments

The described exemplary embodiment relates to sensitive data which is stored in a server such as a cloud storage system. However, though the invention may be applied within the scope of a cloud storage system, the invention may also be embodied in a user terminal.

When sensitive data is stored in a cloud storage system, the method is carried out through a data processing device which is a dedicated virtual machine 1 also called PaVM for Privacy-aware Virtual Machine. According to this illustrated embodiment, sensitive data 6 can only be accessed or processed within the PaVM 1. Therefore, a user needs to use the PaVM 1 in order to perform an action (access and/or process) on sensitive data 6.

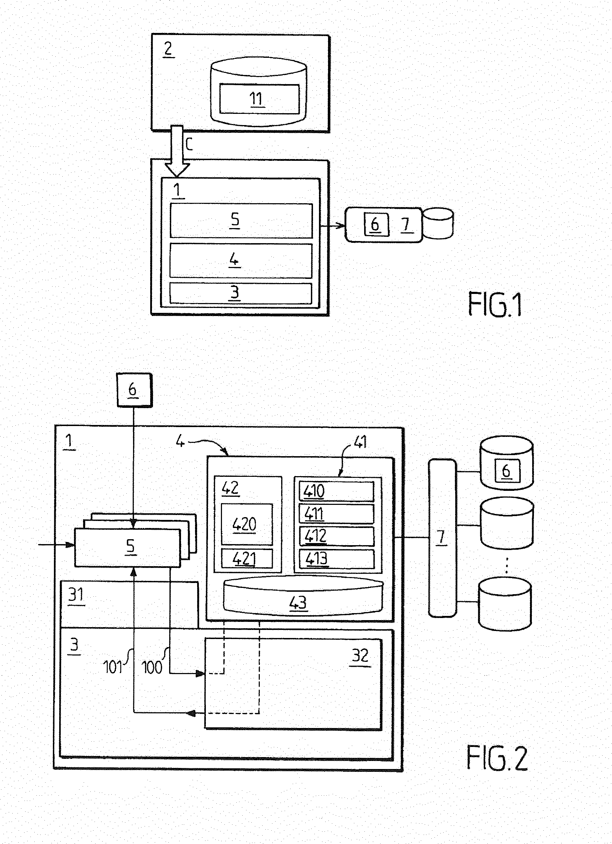

As illustrated in Figure 1, the PaVM 1 is created from a Virtual Machine image: The Privacy-aware Virtual Machine image 11 (see arrow C). The PaVM image 11 is, for example, one of the Virtual Machine images which is provided for cloud computing users by the cloud management device 2 of the cloud storage system. For instance, the PaVM image 11 could be built from an available Virtual Machine image, such as a Linux Virtual Machine image, in which some additional modules which will be described in details hereinafter have been added.

The Privacy-aware Virtual Machine 1 includes an operating system 3, an additional file system module 4 and user applications 5 for accessing and processing sensitive data 6.

Sensitive data 6 is, for instance, stored in a server 7 of the cloud storage system. Sensitive data is associated with privacy policies describing how this sensitive data can be accessed and processed within the Privacy-aware Virtual Machine 1. Privacy policies to be enforced may, for instance, include regulatory policies depending on the country where the owner of the said sensitive data is located, enterprise policies and/or individual policies.

In a preferred embodiment, sensitive data 6 is encrypted. In a more preferred embodiment, the encrypted sensitive data is encapsulated into an encrypted file. Such an encrypted file is named Privacy Data Envelope. As previously mentioned, Privacy Data Envelopes are described in detail in the article "Privacy Data Envelop: Concept and Implementation", Proc. Conf. on privacy, Security and Trust, PST 2011, Montreal, Canada, 2011.

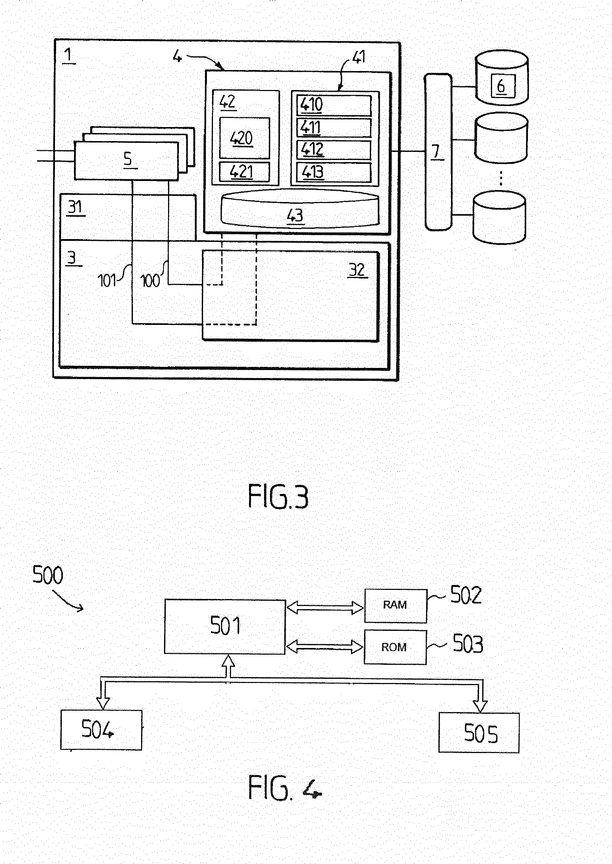

Figures 2 and 3 illustrate in more details the data processing device or PaVM 1.

The operating system 3 comprises an operating system interface 31 and a file system 32. The operating system interface 31 receives input system calls 100 from applications 5 which would like to perform action on sensitive data 6 and forwards system response 101 to the said applications 5.

The file system 32 is adapted to execute file management functions and generate system response 101 in response to input system calls 100. The file system 32 is notably arranged to execute the following file management functions: create file, delete file, open file, close file, read data, write data, move file, copy file, get/set file attributes, rename file. By convention, system calls are designated by the management function that they call.

The file system 32 comprises an interception module 33 for intercepting the input system calls originating from the operating system interface 31 and forwarding the input system calls to an additional file system module 4 which is arranged to determine whether the input system call complies with the privacy policy associated with the sensitive data 6 on which an action is requested. The additional file system module 4 is referred as PaFS module 4 for Privacy-aware File System, in the hereinafter description. The PaFS module 4 is implemented in the user space while the file system 32 is implemented in the system space.

In some embodiments, the file system 32 is provided with a mechanism of file system request interception, for instance a FUSE Kernel module for the Linux OS. Such mechanism allows intercepting all file management input system calls 100 in a given mounted directory and offers an Application Programming Interface or API which enables communication between the file system 32 and the PaFS module 4. Regarding the Linux environment, more details about FUSE (File system in USer Space) are described in the website: http://fuse.sourceforge.net/. Thus, the FUSE kernel module is capable of intercepting a system call in a system space and forwarding it to the user space. The step of determining whether the intercepted system call complies with the associated privacy policies is therefore executed in the user space.

The term "system space", also called Kernel space, as used herein refers to memory space which is reserved for running the OS kernel and the OS kernel extensions or modules. In contrast, the term "user space" as used herein refers to the memory space where all user applications run. Typically, system space and user space are subjected to different security processes.

The PaFS module 4 comprises a privacy controller sub-module 41 which is used when any application requests an access to sensitive data through a system call 100 and a file and policy manager sub-module 42 which is used when a user creates or loads sensitive data 6.

The privacy controller sub-module 41 may also comprises a decrypting function 410 which enables to decrypt and extract encrypted data 6. In some embodiments, the decrypting function 410 includes decrypting an encrypted file. Some of these embodiments include a Privacy Data Envelope which encapsulates both encrypted data and the associated privacy policies.

The privacy controller sub-module 41 comprises a preliminary checking function 411 which determines whether the intercepted system call 100 relates to sensitive data 6 associated with privacy policies. If the intercepted system call 100 does not relates to sensitive data, the file management function corresponding to the intercepted system call may be executed without further processing. In an embodiment, the checking function 411 is capable of determining that the system call relates to a Privacy Data Envelope.

The privacy controller sub-module 41 comprises a main checking function 412 which is implemented when the intercepted system call 100 relates to sensitive data 6.

The main checking function 412 determines whether the system call 100 for performing an action on a sensitive data complies with the associated privacy policy.

Privacy policies are rules which determine whether a file management function provided by the file system can be executed as a function of the entity which requests the action, the sensitive data on which the action is requested and, optionally, features of the execution environment of the entity, such as the location of the server hosting the execution environment or the security level of the execution environment.

Therefore, the main checking function 412 retrieves privacy policies which are associated with the sensitive data 6 for which an action is requested and collects information about the entity and, optionally, about the execution environment of the entity. The entity can be a human user or an application.

According to some embodiments, the privacy policies are XACML-based policies, XACML designating extensible Access Control Markup Language standard. Such a XACML language enables to define a large range of privacy policies. Therefore, the main checking function 412 is arranged to support the XACML standard.

Finally, the privacy controller sub-module 41 comprises an instructionfunction 413 which communicates with the file system 32, for instance through the Application Programming Interface which may be provided by the FUSE kernel module. The instruction function 413 is arranged to initiate execution of the file management function upon determining that the system call complies with the privacy policies associated with sensitive data 6 on which an action is requested and/or generating an error message if the system call 100 does not comply with the said privacy policy. To that end, the instruction function 413 is able to send instruction to the file system 32 for executing the system call 100. In other words, the instruction function 413 causes execution of the system call by the file system 32 itself.

In an alternative embodiment, the PaFS module 4 is capable of executing directly the file management action. Accordingly, the PaFS module 4 initiates execution of the file management function either by executing or by causing the file system to execute the file management function.

The file and policy manager sub-module 42 is used when a user creates or loads sensitive data. The file and policy manager 42 comprises a storing function 420 for loading and storing sensitive data 6 and associated policy, and a link generating function 421 for generating and storing a link between the sensitive data and the associated privacy policy.

According to an embodiment of the invention, the links between sensitive data 6 and the associated privacy policies are stored in a dedicated Privacy-aware File Directory 43. According to a second embodiment, the link is stored as an extended attribute of the file containing the sensitive data. This link is either the content of the privacy policy itself or a pointer/reference to a file containing the privacy policy. In a third possible embodiment, when sensitive data are encapsulated in a Privacy Data Envelope, the privacy policies content (or a pointer/reference to them) are embedded in the Privacy Data Envelope so that the link between the sensitive data and the associated privacy policy is implicit.

A process for creating or loading sensitive data associated with privacy policies, such as a Privacy Data Envelope, is illustrated in relation with Figure 2. Sensitive data is first encapsulated in Privacy Data Envelope structure before uploading it. An input system call 100 corresponding to a create file function is generated, intercepted by the FUSE kernel module and then forwarded to the PaFS module 4. Then, the file and policy manager sub-module 42 stores the Privacy Data Envelope and, optionally, stores a link between sensitive data and associated privacy policy. The Privacy Data Envelope is stored in a server 7 of a cloud storage system.

A process for requesting an action on sensitive data associated with privacy policies, both encapsulated in a Privacy Data Envelope, will now be described in relation with Figure 3.

When an application requests an action on sensitive data 6 encapsulated in a Privacy Data Envelope, the operating system interface 31 receives an input system call 100. In this context, application is understood in a broad sense as it can be any business or end-user application, an operating system command executed through a shell, a Secure Shell, a File Transfer Protocol server, etc. The system call can be for instance a copy or delete instruction generated through an operating system command line interface or an open instruction generated by a business application which tries to open the file.

The system call 100 is intercepted, for instance by a FUSE kernel module, not shown, of the file system 32 which forwards the system call 100 to the PaFS module 4. Then, the PaFS module 4 determines whether the system call 100 relates to a Privacy Data Envelope. If data for which an action is requested is not encapsulated in a Privacy Data Envelope, the PaFS module 4 sends directly to the file system 32 instruction for executing the system call 100 and the system call 100 is executed by the file system 32.

Upon determining that the requested sensitive data is encapsulated in a Privacy Data Envelope, the decrypting function 410 of the privacy controller sub-module 4 decrypts the Privacy Data Envelope in order to retrieve the privacy policies.

The privacy controller sub-module 4 also collects information about the entity which requests the action and, optionally, about the execution environment of the entity.

Then, the privacy controller sub-module 4 determines whether the system call 100 complies with the retrieved privacy policies as a function of information about the entity and, optionally, information about the execution environment of the entity.

If the system call 100 does not comply with the privacy policies, the corresponding file system management function is not executed. The instruction function 413 may therefore generate an error message that explains that the requested file management function violates the privacy policies. The error message can be sent to the user or to the application 5 which requests an access.

If the system call 100 complies with the associated privacy policies, the file management function corresponding to the requested system call 100 is executed. Thus, the file system 32 executes the requested system call and performs the related obligations, such as logging, if any.

Thus, thanks to the invention, any possible action to be performed on the file is controlled by the privacy policies.

According to a non-illustrated embodiment, it may be possible to intercept a system call 100 by substituting the original system call by an equivalent one that is able to support data protected by PDE or equivalent method. For instance, it may be possible to replace the copy/delete/move and/or rename function of the file management system by another related file management functions which are arranged to determine that the system call 100 relates to sensitive data 6 associated with a privacy policy, determine whether the system call 100 complies with the privacy policy associated with the sensitive data 6 on which an action is requested, and initiate execution of the system call if the system call complies with the privacy policy and, otherwise, generate an error message.

The data processing device described above may be implemented as hardware means like e.g. an ASIC, or a combination of hardware and software means, e.g. an ASIC and an FPGA, or at least one microprocessor and at least one memory with software modules located therein, e.g. a programed computer.

Figure 4 shows a functional diagram of a programmed computer 500 that may be used for that purpose.

Computer 500 has a core and several peripherals connected via a communication bus. The major components of the core are a microprocessor 501 (often called the CPU) random access memory (RAM) 502 and read only memory (ROM) 503. The peripherals consist of devices that allow information to be input to the system from users, output to users and stored and retrieved (mass storage devices 504 such as hard disks and network interfaces 505).

The invention is not limited to the described embodiments. The appended claims are to be construed as embodying all modification and alternative constructions that may be occurred to one skilled in the art, which fairly fall within the basic teaching here, set forth.

More particularly, it is to be understood that the data processing device is not limited to a virtual machine and may also be directly implemented in a terminal.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The invention may be implemented by means of hardware as well as software. The same item of hardware may represent several "means".

In the claims, any reference signs placed between parentheses shall not be construed as limiting the scope of the claims.

It is to be understood that, within the scope of the appended claims, the invention may be practiced otherwise than as specifically described herein.

## Claims

1. A method for processing sensitive data (6) associated with a privacy policy in a file system (32) adapted to execute file management functions in response to system calls (100), the method comprising:
- intercepting, by a data processing device (1), a system call (100) for performing an action on sensitive data (6);
- determining that the system call (100) relates to sensitive data (6) associated with a privacy policy;
- retrieving the privacy policy associated with the sensitive data (6) for which an action is requested;
- determining whether the system call (100) complies with the privacy policy associated with the sensitive data (6) for which an action is requested; and
- initiating execution of the file management function corresponding to the system call (100) based on the determination that the system call (100) complies with the privacy policy.

2. A method according to claim 1, wherein the system call (100) is intercepted in a system space and forwarded to a user space, the step of determining whether the system call (100) complies with the privacy policy associated with the sensitive data (6) for which an action is requested being executed in the user space.

3. A method according to claim 1 or 2, comprising generating an error message if the system call (100) does not comply with the said privacy policy.

4. A method according to claim 1 or 2, wherein sensitive data is encrypted, the method comprising decrypting the sensitive data (6) if the system call (100) complies with the privacy policy.

5. A method according to claim 1 or 2, comprising a preliminary step of generating a link between the sensitive data (6) and the associated privacy policy.

6. A method according to claim 5, wherein the link between the sensitive data (6) and the associated privacy policy is generated by:
- encapsulating the sensitive data and the associated privacy policy in a file,
- putting the privacy policy as extended attribute in a file containing the sensitive data (6), or
- generating and storing a link in a dedicated file Directory (43).

7. A method according to claim 1 or 2, wherein the system call (100) corresponds to a function which is selected in the group consisting of copy, delete, rename, read, write, and move functions.

8. A data processing device (1) comprising:
- a data storage; and
- a processor communicatively connected to the data storage (8), the processor being configured to:
- intercept a system call (100) originating from an operating system interface (31) for performing an action on sensitive data (6);
- determine that an intercepted system call (100) relates to sensitive data (6) associated with a privacy policy;
- retrieve the privacy policy associated with sensitive data (6);
- determine whether the intercepted system call (100) complies with a privacy policy associated with the sensitive data (6) for which an access is requested; and
- send an instruction to the file system (32) for executing the file management function corresponding to the system call (100) in response to determining that the system call (100) complies with the said privacy policy.

9. A data processing device (1) according to claim 8, comprising a file system (32) adapted to execute file management function in response to system calls (100).

10. A data processing device (1) according to claim 8 or 9, wherein the processor is configured to intercept the system call (100) in a system space and forward the intercepted system call (100) in a user space, the determining whether the intercepted system call (100) complies with a privacy policy associated with the sensitive data for which an action is requested being executed in the user space.

11. A data processing device (1) according to claim 10, comprising a FUSE kernel module for intercepting the system call (100) originating from the operating system interface (31).

12. A data processing device (1) according to claim 8 or 9, wherein the processor is configured to generate an error message if the system call (100) does not comply with the privacy policy.

13. A data processing device (1) according to claim 8 or 9, wherein the processor is configured to decrypt the sensitive data (6) in response to determining that the system call (100) complies with the said privacy policy.

14. A data processing system (1) according to claim 8 or 9, wherein the processor configured to determine whether the system call (100) complies with a privacy policy is further configured to support XACML privacy policies.

15. A data processing device (1) according to claim 8 or 9, wherein the said processing device (1) is a virtual machine.

## Amended claims

### Amended claims in accordance with Rule 137(2) EPC.

**1.** A method for processing sensitive data (6) associated with a privacy policy in a file system (32) adapted to execute file management functions in response to system calls (100) requested by an entity through a remote server, the method comprising:
- intercepting, by a data processing device (1), a system call (100) for performing an action on sensitive data (6);
- determining that the system call (100) relates to sensitive data (6) associated with a privacy policy;
- retrieving the privacy policy associated with the sensitive data (6) for which an action is requested;
- collecting information about the entity and the execution environment of the entity;
- determining whether the system call (100) complies with the privacy policy associated with the sensitive data (6) for which an action is requested, the determination being executed as a function of the entity which requests the system call and features of the execution environment of the entity; and
- initiating execution of the file management function corresponding to the system call (100) based on the determination that the system call (100) complies with the privacy policy.

**2.** A method according to claim 1, wherein the system call (100) is intercepted in a system space and forwarded to a user space, the step of determining whether the system call (100) complies with the privacy policy associated with the sensitive data (6) for which an action is requested being executed in the user space.

**3.** A method according to claim 1 or 2, comprising generating an error message if the system call (100) does not comply with the said privacy policy.

**4.** A method according to claim 1 or 2, wherein sensitive data is encrypted, the method comprising decrypting the sensitive data (6) if the system call (100) complies with the privacy policy.

**5.** A method according to claim 1 or 2, comprising a preliminary step of generating a link between the sensitive data (6) and the associated privacy policy.

**6.** A method according to claim 5, wherein the link between the sensitive data (6) and the associated privacy policy is generated by:
- encapsulating the sensitive data and the associated privacy policy in a file,
- putting the privacy policy as extended attribute in a file containing the sensitive data (6), or
- generating and storing a link in a dedicated file Directory (43).

**7.** A method according to claim 1 or 2, wherein the system call (100) corresponds to a function which is selected in the group consisting of copy, delete, rename, read, write, and move functions.

**8.** A data processing device (1) comprising:
- a data storage; and
- a processor communicatively connected to the data storage (8), the processor being configured to:
- intercept a system call (100) originating from an operating system interface (31) for performing an action on sensitive data (6);
- determine that an intercepted system call (100) relates to sensitive data (6) associated with a privacy policy;
- retrieve the privacy policy associated with sensitive data (6);
- collect information about an entity which requests the system call through a remote Server and features of an execution environment of the entity;
- determine whether the intercepted system call (100) complies with a privacy policy associated with the sensitive data (6) for which an access is requested, the determination being executed as a function of the entity which requests the system call and features of an execution environment of the entity; and
- send an instruction to the file system (32) for executing the file management function corresponding to the system call (100) in response to determining that the system call (100) complies with the said privacy policy.

**9.** A data processing device (1) according to claim 8, comprising a file system (32) adapted to execute file management function in response to system calls (100).

**10.** A data processing device (1) according to claim 8 or 9, wherein the processor is configured to intercept the system call (100) in a system space and forward the intercepted system call (100) in a user space, the determining whether the intercepted system call (100) complies with a privacy policy associated with the sensitive data for which an action is requested being executed in the user space.

**11.** A data processing device (1) according to claim 10, comprising a FUSE kernel module for intercepting the system call (100) originating from the operating system interface (31).

**12.** A data processing device (1) according to claim 8 or 9, wherein the processor is configured to generate an error message if the system call (100) does not comply with the privacy policy.

**13.** A data processing device (1) according to claim 8 or 9, wherein the processor is configured to decrypt the sensitive data (6) in response to determining that the system call (100) complies with the said privacy policy.

**14.** A data processing system (1) according to claim 8 or 9, wherein the processor configured to determine whether the system call (100) complies with a privacy policy is further configured to support XACML privacy policies.

**15.** A data processing device (1) according to claim 8 or 9, wherein the said processing device (1) is a virtual machine.
